# EUROPEAN PATENT APPLICATION

(11) **EP 3 473 596 A1**
(43) Date of publication of application: **24.04.2019**
(21) Application number: 17813228.8
(22) Date of filing: 09.06.2017
(51) Int. Cl.: C01B 32/168, C01B 32/159, H01M 4/88, H01M 4/90

(54) **CARBON MATERIAL AND METHOD FOR MANUFACTURING SAME**

(30) Priority: 15.06.2016 JP 2016119377
(71) Applicant: Tohoku University, Sendai-shi, Miyagi 980-8577 (JP); Stella Chemifa Corporation, Osaka-shi Osaka 5410044 (JP)
(72) Inventor: TOHJI, Kazuyuki, Sendai-shi Miyagi 980-8577 (JP); SATO, Yoshinori, Sendai-shi Miyagi 980-8577 (JP); YOKOYAMA, Koji, Sendai-shi Miyagi 980-8577 (JP); HIRANO, Kazutaka, Izumiotsu-shi Osaka 595-0075 (JP); SATO, Yoshinori, Izumiotsu-shi Osaka 595-0075 (JP)
(74) Representative: Sajda, Wolf E.
(86) International application number: PCT/JP2017/021466
(87) International publication number: WO 2017/217331

(57) **Abstract**

Disclosed is a carbon material, such as a carbon nanotube, into which a boron atom and/or a phosphorus atom is/are introduced while maintaining its characteristic structures and functions and a method for producing the same. The carbon material of the present invention is one in which a boron atom and/or a phosphorus atom is/are introduced into part of carbon atoms composing the carbon material, and can be produced by a method for producing a carbon material including the steps of: bringing a carbon material into contact with a fluorination treatment gas containing a fluorine-containing gas, thereby subjecting a surface of the carbon material to fluorination treatment; and bringing the carbon material after the fluorination treatment into contact with a boronization treatment gas containing a boron-containing gas, thereby subjecting to boronization treatment and/or into contact with a phosphorization treatment gas containing a phosphorus-containing gas, thereby subjecting to phosphorization treatment.

## Description

### Technical Field

The present invention relates to a carbon material and a method for producing the same, and more specifically relates to a carbon material having a carbon backbone composed of a carbon atom, such as a carbon nanotube, into which a boron atom and/or a phosphorus atom is/are introduced and a method for producing the same.

### Background Art

Single-walled carbon nanotubes (SWCNTs) are hollow cylindrical substances composed of only sp² hybridized carbon atoms and are expected to be applied for various energy devices and electronic devices due to their high conductibility and excellent carrier transport properties. In recent years, a boron atom-containing carbon nanotube with improved electrical conductivity and thermal conductivity by introducing a boron atom into such single-walled carbon nanotube has been proposed.

Examples of a method for introducing a boron atom into a carbon nanotube include the chemical vapor deposition method (CVD method) and the arc discharge method. Of these, as the former, the following Patent Literature 1 discloses a method in which a mixed gas with a carbon-containing gas and a boron-containing gas is introduced into a substrate having a catalyst which is disposed in a low-pressure chamber and then a boron-doped carbon nanotube is grown on the substrate from the mixed gas by the CVD method.

As the latter, for example, the following Patent Literature 2 discloses a method for producing a boron atom-containing carbon nanotube by the following steps: providing first and second carbon sources wherein at least one carbon source contains a boron source; connecting a boron-containing carbon source to a negative terminal (cathode) of an electric arc discharge supply; connecting the second carbon source to a positive terminal (anode) of the electric arc discharge supply; and applying a discharge current between the first and second carbon sources.

However, the production method mentioned in each of the above Patent Literatures is a method for a carbon nanotube containing a boron atom by adding a boron source when a carbon nanotube is produced. Thus, it needs to perform production by controlling the size and the crystal structure of a carbon nanotube containing a boron atom, and various production conditions must be controlled, which is complicated. For example, like a metallic-type carbon nanotube and a semiconductor-type carbon nanotube, for a carbon nanotube with already improved functionality due to its structure and size, it is difficult to dope a boron atom to add a new function while maintaining its function.

### Prior Art Document

### Patent Literatures

Patent Literature 1: JP 2008-222494 A
Patent Literature 2: JP 2010-520148 W

### Summary of the Invention

### Technical Problem

The present invention has been made in the light of the above problems, and it is an object of the present invention to provide a carbon material, such as a carbon nanotube, into which a boron atom and/or a phosphorus atom is/are introduced while maintaining its characteristic structures and functions and a method for producing the same.

### Means for Solving the Problems

The present invention which can solve the foregoing problems provides a carbon material in which a boron atom and/or a phosphorus atom is/are introduced into part of carbon atoms composing the carbon material.

In the configuration described above, a carbon-fluorine bond may exist on a surface of the carbon material.

In the configuration described above, the carbon material before the boron atom and/or the phosphorus atom is/are introduced may be a nitrogen-containing carbon material which has a carbon backbone composed of a carbon atom and in which part of the carbon atoms in the carbon backbone are substituted with a nitrogen atom.

In the configuration described above, the nitrogen atom may be at least one selected from the group consisting of a pyridine type, a pyrrole type, a graphite type, an oxidized type, and a combination thereof.

In the configuration described above, the carbon material before the boron atom and/or the phosphorus atom is/are introduced may be a nitrogen-containing carbon material in which an amino group is bound on a surface thereof.

In the configuration described above, the amino group is preferably at least one selected from the group consisting of an unsubstituted amino group, a monosubstituted amino group, and a disubstituted amino group.

In the configuration described above, the carbon material before the boron atom and/or the phosphorus atom is/are introduced may be at least one selected from the group consisting of a carbon nanocoil, graphite, carbon black, diamond-like carbon, a carbon fiber, graphene, amorphous carbon, a fullerene, a carbon nanotube, and a diamond.

In the configuration described above, the nitrogen-containing carbon material may be at least one carbon material selected from the group consisting of a carbon nanocoil, graphite, carbon black, diamond-like carbon, a carbon fiber, graphene, amorphous carbon, a fullerene, a carbon nanotube, and a diamond and in which part of carbon atoms in a carbon backbone of the carbon material are substituted with the nitrogen atom.

In the configuration described above, the nitrogen-containing carbon material may be at least one carbon material selected from the group consisting of a carbon nanocoil, graphite, carbon black, diamond-like carbon, a carbon fiber, graphene, amorphous carbon, a fullerene, a carbon nanotube, and a diamond and in which an amino group is bound on a surface thereof.

The present invention which can solve the foregoing problems provides a method for producing a carbon material in which a boron atom and/or a phosphorus atom is/are introduced into part of carbon atoms composing the carbon material, the method comprising the steps of: bringing the carbon material into contact with a fluorination treatment gas containing a fluorine-containing gas, thereby subjecting a surface of the carbon material to fluorination treatment; and bringing the carbon material after the fluorination treatment into contact with a boronization treatment gas containing a boron-containing gas, thereby subjecting to boronization treatment and/or into contact with a phosphorization treatment gas containing a phosphorus-containing gas, thereby subjecting to phosphorization treatment.

In the configuration described above, the fluorination treatment step and the boronization treatment and/or phosphorization treatment step may be repeatedly performed.

The present invention which can solve the foregoing problems provides a method for producing a carbon material in which a boron atom and/or a phosphorus atom is/are introduced into part of carbon atoms composing the carbon material, the method comprising the steps of: bringing the carbon material into contact with a fluorination treatment gas containing a fluorine-containing gas, thereby subjecting a surface of the carbon material to fluorination treatment; bringing the carbon material after the fluorination treatment into contact with a nitriding treatment gas containing a nitrogen-containing gas while heating, thereby subjecting to nitriding treatment; and bringing the carbon material after the nitriding treatment into contact with a boronization treatment gas containing a boron-containing gas, thereby subjecting to boronization treatment and/or into contact with a phosphorization treatment gas containing a phosphorus-containing gas, thereby subjecting to phosphorization treatment.

In the configuration described above, at least any two steps of the fluorination treatment step, the nitriding treatment step, and the boronization treatment and/or phosphorization treatment step may be sequentially and repeatedly performed.

In the configuration described above, as the carbon material before the fluorination treatment is performed, a nitrogen-containing carbon material which has a carbon backbone composed of a carbon atom and in which part of the carbon atoms in the carbon backbone are substituted with a nitrogen atom may be used.

In the configuration described above, the nitrogen atom is preferably at least one selected from the group consisting of a pyridine type, a pyrrole type, a graphite type, an oxidized type, and a combination thereof.

In the configuration described above, as the carbon material before the fluorination treatment is performed, a nitrogen-containing carbon material in which an amino group is bound on a surface thereof may be used.

In the configuration described above, the amino group is preferably at least one selected from the group consisting of an unsubstituted amino group, a mono-substituted amino group, and a disubstituted amino group.

In the configuration described above, as the carbon material before the fluorination treatment is performed, at least one selected from the group consisting of a carbon nanocoil, graphite, carbon black, diamond-like carbon, a carbon fiber, graphene, amorphous carbon, a fullerene, a carbon nanotube, and a diamond may be used.

In the configuration described above, as the nitrogen-containing carbon material, at least one carbon material selected from the group consisting of a carbon nanocoil, graphite, carbon black, diamond-like carbon, a carbon fiber, graphene, amorphous carbon, a fullerene, a carbon nanotube, and a diamond and in which part of carbon atoms in a carbon backbone in the carbon material are substituted with the nitrogen atom is preferably used.

In the configuration described above, as the nitrogen-containing carbon material, at least one carbon material selected from the group consisting of a carbon nanocoil, graphite, carbon black, diamond-like carbon, a carbon fiber, graphene, amorphous carbon, a fullerene, a carbon nanotube, and a diamond and in which an amino group is bound on a surface thereof may be used.

In the configuration described above, the fluorination treatment is preferably performed using a gas containing a fluorine-containing gas in a proportion of 0.01 vol% to 100 vol%, based on the total volume as the fluorination treatment gas under a condition of a treatment time of 1 second to 24 hours and a treatment temperature of 0 °C to 600 °C.

In the configuration described above, the boronization treatment is preferably performed using a gas containing a boron-containing gas in a proportion of 0.01 vol% to 100 vol% based on the total volume as the boronization treatment gas under a condition of a treatment time of 1 second to 24 hours and a treatment temperature of 1,500 °C or lower.

In the configuration described above, the phosphorization treatment is preferably performed using a gas containing a boron-containing gas in a proportion of 0.01 vol% to 100 vol% based on the total volume as the phosphorization treatment gas under a condition of a treatment time of 1 second to 24 hours and a treatment temperature of 1,500 °C or lower.

In the configuration described above, the nitriding treatment is preferably performed using a gas containing a nitrogen-containing gas in a proportion of 0.01 to 100 vol% based on the total volume as the nitriding treatment gas under a condition of a treatment time of 1 second to 24 hours.

In the configuration described above, a step for removing a fluorine atom existing via a carbon-fluorine bond on a surface of the carbon material after the boronization treatment and/or the phosphorization treatment may not be included.

In the configuration described above, a step for removing a fluorine atom existing via a carbon-fluorine bond on a surface of the carbon material after the boronization treatment, the phosphorization treatment and/or the nitriding treatment may not be included.

The present invention which can solve the foregoing problems provides an air electrode catalyst for a fuel cell, compriss the carbon material.

### Effects of the Invention

According to the present invention, a carbon material is brought into contact with a fluorination treatment gas containing a fluorine-containing gas, thereby subjecting a surface of the carbon material to fluorination treatment, and a fluorine group is introduced to form a reaction scaffold. Next, the carbon material is brought into contact with a boronization treatment gas containing a boron-containing gas, thereby subjecting to boronization treatment, and as a result, it is possible to introduce a boron atom in the reaction scaffold. Alternatively, the carbon material is brought into contact with a phosphorization treatment gas containing a phosphorus-containing gas, thereby subjecting to phosphorization treatment, and as a result, it is possible to introduce a phosphorus atom in the reaction scaffold. In other words, according to the present invention, since the production method is not a method for a carbon material containing a boron atom or phosphorus atom by adding a boron source or phosphorus source when a carbon material, such as a carbon nanotube, is produced, it becomes possible to make the carbon material contain a boron atom and/or a phosphorus atom while maintaining the structures and functions of a carbon material as a starting material. Since a boron atom and/or a phosphorus atom is/are introduced into a carbon material in a vapor phase, it is also possible to introduce a boron atom and/or a phosphorus atom into, for example, an oriented film of a single-walled carbon nanotube that is vertically oriented on a substrate without inhibiting the vertical orientation properties of the single-walled carbon nanotube. As a result, the electronic state of a single-walled carbon nanotube is changed, and it is possible to obtain a single-walled carbon nanotube with more excellent field emission properties, gas storage properties, electron transfer properties, and the like.

### Brief Description of the Drawings

- FIG. 1: is an explanatory diagram for describing a method for producing a carbon material according to a first embodiment of the present invention.
- FIG. 2: is an explanatory diagram for describing a method for producing a carbon material when a nitrogen-containing carbon material is used as a starting material in the first embodiment.
- FIG. 3: is a graph representing an oxygen reduction activity in a boron-containing single-walled carbon nanotube according to Example 1.
- FIG. 4: is a graph representing an oxygen reduction activity in a boron- and nitrogen-containing single-walled carbon nanotube according to Example 4.
- FIG. 5: is a graph representing an oxygen reduction activity in a phosphorus- and nitrogen-containing single-walled carbon nanotube according to Example 6.
- FIG. 6: is a graph representing an oxygen reduction activity in an untreated single-walled carbon nanotube according to Comparative Example 1.

### Description of Embodiments

### First Embodiment

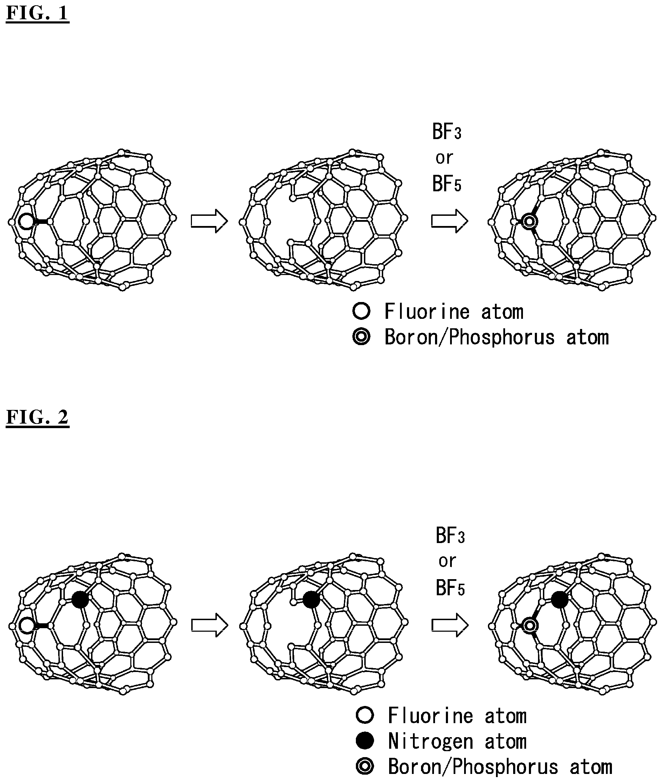

A first embodiment of the present invention will be described below. FIG. 1 is an explanatory diagram for describing a method for producing a carbon material according to the first embodiment of the present invention. FIG. 2 is an explanatory diagram representing a production process when a nitrogen-containing carbon material is used as a starting material in the method for producing a carbon material according to this first embodiment.

A carbon material according to the first embodiment can be produced by a production method including at least a step of subjecting a surface of a carbon material as a starting material to fluorination treatment and a step of subjecting the carbon material after the fluorination treatment to boronization treatment and/or phosphorization treatment, as shown in FIG. 1 and FIG. 2.

Examples of the carbon material as a starting material include a carbon material having a carbon backbone composed of a carbon atom, and preferably a carbon material having a cyclic backbone to which a carbon atom is circularly bound and a diamond. Examples of the carbon material having a cyclic backbone composed of a carbon atom include a carbon nanocoil, graphite, carbon black, diamond-like carbon, a carbon fiber, graphene, amorphous carbon, a fullerene, and a carbon nanotube.

Examples of the carbon nanotube include a single wall carbon nanotube (SWNT) having a structure of one hexagonal mesh tube (graphene sheet), a maluti wall carbon nanotube (MWNT) composed of a multi-layered graphene sheet, a fullerene tube, a bucky tube, and a graphite fibril. "Carbon backbone" means a frame that contains no hydrogen atom and no substituent and the whole of which is composed of carbon atoms.

As a carbon material as the starting material, for example, a nitrogen-containing carbon material having a carbon backbone composed of a carbon atom and in which part of the carbon atoms in the carbon backbone are substituted with a nitrogen atom, or a nitrogen-containing carbon material in which an amino group is bound on a surface thereof may be used (see FIG. 2). There is no particular limitation on the type of a nitrogen atom (nitrogen species) that is introduced by substitution, and examples thereof include a pyridine type, a pyrrole type, a graphite type, an oxidized type, or a combination thereof.

The fluorination treatment step is a step of bringing a carbon material into contact with a fluorination treatment gas containing at least a fluorine-containing gas, thereby subjecting a surface thereof to fluorination treatment in a vapor phase. The step is specifically a step of introducing a fluorine group via a carbon-fluorine bond on a surface of the carbon material, as shown in FIG. 1 and FIG. 2. Therefore, the step differs from, for example, oxidation treatment in which an oxygen-containing functional group, such as a hydroxy group, a carbonyl group, and a carboxyl group, is imparted to an edge portion of a carbon hexagonal mesh surface.

As the fluorination treatment gas, a gas containing a fluorine-containing gas in a proportion of preferably 0.01 to 100 vol%, more preferably 0.1 to 80 vol%, and still more preferably 1 to 50 vol%, based on the total volume is used. When the concentration of the fluorine-containing gas is 0.01 vol% or more, insufficient fluorination of the surface of the carbon material surface can be prevented.

The fluorine-containing gas means a gas containing a fluorine atom, and it is not particularly limited in this embodiment as long as it contains a fluorine atom. Examples of such fluorine-containing gas include hydrogen fluoride (HF), fluorine (F₂), chlorine trifluoride (ClF₃), sulfur tetrafluoride (SF₄), boron trifluoride (BF₃), nitrogen trifluoride (NF₃), and carbonyl fluoride (COF₂). These may be used alone, or a mixture of two or more of these may be used.

The fluorination treatment gas may contain an inert gas. There is no particular limitation on the inert gas, but an inert gas that is reacted with the fluorine-containing gas to adversely affect fluorination treatment of the carbon material, an inert gas that is reacted with the carbon material to cause an adverse effect, and an inert gas that contains an impurity that causes the adverse effect are not preferable. Specifically, examples thereof include nitrogen, argon, helium, neon, krypton, and xenon. These can be used alone, or a mixture of two or more of these can be used. There is no particular limitation on the purity of the inert gas, but regarding an impurity that causes the adverse effect, the purity is preferably 100 ppm or less, more preferably 10 ppm or less, and particularly preferably 1 ppm or less.

The fluorination treatment gas preferably contains no gas containing an oxygen atom. This is because if a gas containing an oxygen atom is contained, a hydroxy group, a carboxyl group, and the like are introduced into the surface of the carbon material, which may cause significant damage to the carbon material. The gas containing an oxygen atom means an oxygen gas or a nitric acid gas.

There is no particular limitation on the treatment temperature when the fluorination treatment is performed, and it is preferably in the range of 0 °C to 600 °C, more preferably 10 °C to 400 °C, and still more preferably 25 °C to 350 °C. When the treatment temperature is 0 °C or higher, the fluorination treatment can be accelerated. On the other hand, when the treatment temperature is 600 °C or lower, removal of a fluorine atom from the formed carbon-fluorine bond can be inhibited, and decrease in treatment efficiency can be prevented. Also, heat deformation of the carbon material and decrease in the yield can be inhibited.

There is no particular limitation on the treatment time (reaction time) of the fluorination treatment, and it is preferably in the range of 1 second to 24 hours, more preferably 1 minute to 12 hours, and still more preferably 1 minute to 9 hours. When the treatment time is 1 second or more, insufficient fluorination of the surface of the carbon material can be prevented. On the other hand, when the treatment time is 24 hours or less, decrease in production efficiency due to prolonged production time can be prevented.

There is no particular limitation on a pressure condition when the fluorination treatment is performed, and the fluorination treatment may be performed under increased pressure or under reduced pressure. From the viewpoint of economy and safety, the fluorination treatment is preferably performed under normal pressure. There is no particular limitation on a reaction container for the fluorination treatment, and a conventionally known reaction container, such as a fixed bed and a fluidized bed, can be adopted.

There is no particular limitation on a method for bringing the carbon material into contact with the fluorination treatment gas, and for example, the carbon material can be brought into contact under a flow of the fluorination treatment gas.

The boronization treatment step is a step of bringing the carbon material after the fluorination treatment into contact with a boronization treatment gas containing at least a boron-containing gas, thereby introducing a boron atom into the carbon material in a vapor phase. More specifically, the step is a step of introducing the boron atom into a carbon backbone or a surface by reaction of a carbon atom, which is a reaction scaffold via a bond of a fluorine group, with the boronization treatment gas.

As the boronization treatment gas, a gas containing a boron-containing gas in a proportion of preferably 0.01 to 100 vol%, more preferably 0.1 to 80 vol%, and still more preferably 1 to 50 vol%, based on the total volume is used. When the concentration of the boron-containing gas is 0.01 vol% or more, insufficient boronization of the surface of the carbon material can be prevented.

The boron-containing gas means a gas containing a boron atom, and it is not particularly limited in this embodiment as long as it contains a boron atom. Examples of such boron-containing gas include boron trifluoride (BF₃), boron trichloride (BCl₃), boron tribromide (BBr₃), borane (e.g., BH₃, B₂H₆, B₄H₁₀, and the like) or a derivative thereof. These may be used alone, or a mixture of two or more of these may be used.

The boronization treatment gas may contain an inert gas. There is no particular limitation on the inert gas, but an inert gas that is reacted with the boron-containing gas to adversely affect boronization treatment of the carbon material, an inert gas that is reacted with the carbon material to cause an adverse effect, and an inert gas that contains an impurity that causes the adverse effect are not preferable.

Specifically, examples thereof include nitrogen, argon, helium, neon, krypton, and xenon. These can be used alone, or a mixture of two or more of these can be used. There is no particular limitation of the purity of the inert gas, but regarding an impurity that causes the adverse effect, the purity is preferably 100 ppm or less, more preferably 10 ppm or less, and particularly preferably 1 ppm or less.

The boronization treatment gas preferably contains no gas containing an oxygen atom. This is because if a gas containing an oxygen atom is contained, a hydroxy group, a carboxyl group, and the like are introduced into the surface of the carbon material, which may cause significant damage to the carbon material. The gas containing an oxygen atom means an oxygen gas or a nitric acid gas.

The treatment temperature when the boronization treatment is performed is 1,500 °C or lower, preferably in the range of 100 °C to 1,500 °C, and more preferably in the range of 200 °C to 1000 °C. When the treatment temperature is 1,500 °C or lower, heat deformation of the carbon material and decrease in the yield can be inhibited.

The treatment time (reaction time) of the boronization treatment is in the range of 1 second to 24 hours, preferably 1 minute to 12 hours, and more preferably 1minute to 9 hours. When the treatment time is 1 second or more, insufficient boronization of the surface of the carbon material can be prevented. On the other hand, when the treatment time is 24 hours or less, decrease in production efficiency due to prolonged production time can be prevented.

There is no particular limitation on a pressure condition when the boronization treatment is performed, and the boronization treatment may be performed under increased pressure or under reduced pressure. From the viewpoint of economy and safety, the boronization treatment is preferably performed under normal pressure. There is no particular limitation on a reaction container for the boronization treatment, and a conventionally known reaction container, such as a fixed bed and a fluidized bed, can be adopted.

There is no particular limitation on a method for bringing the carbon material into contact with the boronization treatment gas, and for example, the carbon material can be brought into contact under a flow of the boronization treatment gas.

The phosphorization treatment step is a step of bringing the carbon material after the fluorination treatment into contact with a phosphorization treatment gas containing at least a phosphorus-containing gas, thereby introducing a phosphorus atom into the carbon material in a vapor phase. The phosphorization treatment step is a step of bringing the carbon material after the fluorination treatment into contact with a phosphorization treatment gas containing at least a phosphorus-containing gas, thereby introducing a phosphorus atom in a vapor phase into a reaction scaffold that was formed by introduction of a fluorine group.

As the phosphorization treatment gas, a gas containing a phosphorus-containing gas in a proportion of preferably 0.01 to 100 vol%, more preferably 0.1 to 80 vol%, and still more preferably 1 to 50 vol%, based on the total volume is used. When the concentration of the phosphorus-containing gas is 0.01 vol% or more, insufficient phosphorization of the surface of the carbon material can be prevented.

The phosphorus-containing gas means a gas containing a phosphorus atom, and it is not particularly limited in this embodiment as long as it contains a phosphorus atom. Examples of such phosphorus-containing gas include phosphorus trifluoride (PF₃), phosphorus pentafluoride (PF₅), phosphorus trichloride (PCl₃), phosphorus tribromide (PBr₃), and phosphine. These may be used alone, or a mixture of two or more of these may be used.

The phosphorization treatment gas may contain an inert gas, as in the case of the boronization treatment gas. Also, regarding the type of the inert gas, an inert gas that is reacted with the phosphorus-containing gas to adversely affect phosphorization treatment of the carbon material, an inert gas that is reacted with the carbon material to cause an adverse effect, and an inert gas that contains an impurity that causes the adverse effect are not preferable. Specific examples of the inert gas are the same as in the case of the boronization treatment gas. The purity of the inert gas is also same as in the case of the boronization treatment gas.

The phosphorization treatment gas preferably contains no gas containing an oxygen atom. This is because if a gas containing an oxygen atom is contained, a hydroxy group, a carboxyl group, and the like are introduced into the surface of the carbon material, which may cause significant damage to the carbon material. The gas containing an oxygen atom means an oxygen gas or a nitric acid gas.

The treatment temperature when the phosphorization treatment is performed is 1,500 °C or lower, preferably in the range of 100 °C to 1,500 °C, more preferably in the range of 200 °C to 1,200 °C. When the treatment temperature is 1,500 °C or lower, heat deformation of the carbon material and decrease in the yield can be inhibited.

The treatment time (reaction time) of the phosphorization treatment is in the range of 1 second to 24 hours, preferably 1 minute to 12 hours, and more preferably 1 minute to 9 hours. When the treatment time is 1 second or more, insufficient phosphorization of the surface of the carbon material can be prevented. On the other hand, when the treatment time is 24 hours or less, decrease in production efficiency due to prolonged production time can be prevented.

There is no particular limitation on a pressure condition when the phosphorization treatment is performed, and the phosphorization treatment may be performed under increased pressure or under reduced pressure. From the viewpoint of economy and safety, the phosphorization treatment is preferably performed under normal pressure. There is no particular limitation on a reaction container for the phosphorization treatment, and a conventionally known reaction container, such as a fixed bed and a fluidized bed, can be adopted.

There is no particular limitation on a method for bringing the carbon material into contact with the phosphorization treatment gas, and for example, the carbon material can be brought into contact under a flow of the phosphorization treatment gas.

When both boron atom and phosphorus atom are desirably introduced into the carbon material after the fluorination treatment, both boronization treatment and phosphorization treatment may be performed. In this case, the order of the boronization treatment and the phosphorization treatment is not particularly limited and optional.

Here, a fluorine atom may exist via a carbon-fluorine bond on the surface of the carbon material after the boronization treatment and/or the phosphorization treatment. For this reason, in order to maintain the dispersibility of the carbon material after treatment into a dispersion medium, the step for removing a fluorine atom is preferably not included.

When the fluorine atom exists, a polarity is imparted to the carbon material, and aggregation and precipitation of each of the carbon material in a dispersion medium can be prevented. In other words, the carbon material of this embodiment can be homogeneously dispersed into a dispersion medium, and as a result, a dispersion liquid of the carbon material having high dispersion stability can be obtained. When the dispersibility of the carbon material into a dispersion medium is not maintained, the step for removing a fluorine atom may be performed by a conventionally known method.

There is no particular limitation on the dispersion medium, and a polar solvent is preferable in this embodiment. There is no particular limitation on the polar solvent, and examples thereof include water, an organic solvent, or a mixed solution thereof. There is no particular limitation on the organic solvent, and examples thereof include alcohols such as 2-propanol and ethanol, DMF (N,N-dimethylformamide), THF (tetrahydrofuran), cyclohexane, and ionic liquids. Of these organic solvents, alcohols can increase the dispersibility of the carbon material in this embodiment.

In this embodiment, the carbon material can be added to a dispersion medium, such as various inorganic materials, various metal materials, and various carbon materials, and in such cases, the handleability during use is excellent and the dispersibility is satisfactory. In this embodiment, the dispersion medium may be used alone, or a mixture of these dispersion media may be used.

It is preferable that a surfactant as a dispersant is not added to the dispersion liquid of the carbon material according to this embodiment. In this way, a dispersion liquid composed of only the carbon material and the dispersion medium can be provided. Furthermore, the dispersion liquid can be prevented from containing alkali metals, organic compounds, or the like mixed in the surfactant.

In the method for producing a carbon material of this first embodiment, after the boronization treatment and/or the phosphorization treatment is/are completed, further the fluorination treatment and the boronization treatment and/or the phosphorization treatment may be repeatedly performed. In this way, it is possible to introduce still more fluorine groups into the carbon material to form a reaction scaffold, and it becomes possible to introduce more boron atoms and/or phosphorus atoms into the reaction scaffold. There is no particular limitation on the number of repeats of the fluorination treatment and the boronization treatment and/or the phosphorization treatment.

From the above, the method for producing a carbon material according to the first embodiment can obtain a carbon material in which a boron atom and/or a phosphorus atom is/are introduced into part of carbon atoms in a carbon backbone. In the carbon material obtained by the production method, a boron atom and/or a phosphorus atom is/are introduced into the carbon backbone or the surface without causing a structural defect in the carbon backbone.

When the carbon material of this embodiment is, for example, a single-walled carbon nanotube into which a boron atom and/or a phosphorus atom is/are introduced, or the like, it becomes possible to appropriately control the charge state of its surface and the carrier transport properties, and application to a polarizable electrode of an electric double-layer capacitor, an active layer of an organic thin-film photovoltaic cell, an air electrode of a fuel cell, and the like becomes possible. Regarding the application to an air electrode of a fuel cell, specifically, the carbon material may be used as a catalyst of an air electrode.

### Second Embodiment

A method for producing a carbon material according to a second embodiment of the present invention will be described below.

The method for producing a carbon material according to the second embodiment is different in that, immediately after the fluorination treatment step, the carbon material after the fluorination treatment is subjected to nitriding treatment before the boronization treatment and/or the phosphorization treatment.

The nitriding treatment step is a step of bringing the carbon material after the fluorination treatment into contact with a nitriding treatment gas containing at least a nitrogen-containing gas, thereby introducing a nitrogen atom into the carbon material in a vapor phase. In the step, a form of introducing a nitrogen atom into the carbon material can be changed according to a treatment temperature (details will be mentioned below).

There is no particular limitation on the nitriding treatment gas as long as it contains a nitrogen-containing gas, and a gas containing the nitrogen-containing gas in a proportion of preferably 0.01 to 100 vol%, more preferably 0.1 to 80 vol%, and still more preferably 1 to 50 vol%, based on the total volume of the nitriding treatment gas is used. When the concentration of the nitrogen-containing gas is 0.01 vol% or more, insufficient nitriding of the carbon material can be prevented.

The nitrogen-containing gas means a gas containing a nitrogen atom, and it is not particularly limited in this embodiment as long as it contains a nitrogen atom. Examples of such nitrogen-containing gas include ammonia (NH₃), diazene (N₂H₂), hydrazine (N₂H₄), ammonium chloride (NH₄Cl), N₃H₈, and an amine compound. These may be used alone, or a mixture of two or more of these may be used. When these compounds are liquids or solids at normal temperature, nitriding treatment is performed by heating and vaporizing within the range of the treatment temperature mentioned below.

There is no particular limitation on the amine compound, and examples thereof include a primary amine, a secondary amine, and a tertiary amine. Furthermore, examples of the primary amine include methylamine, ethylamine, propylamine, isopropylamine, and butylamine. Examples of the secondary amine include dimethylamine, diethylamine, dipropylamine, diisopropylamine, and dibutylamine. Examples of the tertiary amine include trimethylamine, triethylamine, tripropylamine, triisopropylamine, and tributylamine.

The nitriding treatment gas may contain an inert gas. There is no particular limitation on the inert gas, but an inert gas that is reacted with the nitrogen-containing gas to adversely affect nitriding treatment of the carbon material, an inert gas that is reacted with the carbon material to cause an adverse effect, and an inert gas that contains an impurity that causes the adverse effect are not preferable.

Specifically, examples thereof include nitrogen, argon, helium, neon, krypton, and xenon. These can be used alone, or a mixture of two or more of these can be used. There is no particular limitation on the purity of the inert gas, but regarding an impurity that causes the adverse effect, the purity is preferably 100 ppm or less, more preferably 10 ppm or less, and particularly preferably 1 ppm or less.

Here, the introduction form when a nitrogen atom is introduced into the carbon material can be controlled by a treatment temperature in the nitriding treatment step. More specifically, when the treatment temperature of the nitriding treatment is in the range of preferably 25 °C or higher and less than 300 °C, more preferably 50 °C to 250 °C, and still more preferably 100 °C to 200 °C, an amino group can be introduced into the surface of the carbon material after the fluorination treatment, and part of carbon atoms in the carbon backbone can be substituted with a nitrogen atom.

In this case, when the treatment temperature is 25 °C or higher, insufficient introduction of an amino group into the surface of the carbon material can be prevented. When the treatment temperature is in the range of preferably 300 °C or higher and
1,500 °C or lower, more preferably 400 °C to 1,500 °C, and still more preferably 400 °C to 1,200 °C, part of only carbon atoms in the carbon backbone can be substituted with a nitrogen atom without introducing an amino group into the surface of the carbon material. In this case, when the treatment temperature is 1,500 °C or lower, heat deformation of the carbon material and decrease in the yield can be inhibited.

Here, examples of the amino group introduced into the surface of the carbon material include at least one selected from the group consisting of an unsubstituted amino group (an NH₂ group), a monosubstituted amino group, and a disubstituted amino group. As the monosubstituted amino group, a monoalkylamino group having 1 to 10 carbon atoms, and more specifically, a methylamino group (an NHCH₃ group), an ethylamino group (an NHC₂H₅ group), and the like are preferable. As the disubstituted amino group, a dialkylamino group having 1 to 10 carbon atoms, and more specifically, a dimethylamino group (an N(CH₃)₂ group), a diethylamino group (an N(C₂H₅)₂ group), and the like are preferable.

A nitrogen atom (nitrogen species) that is introduced by substitution of part of carbon atoms in the carbon backbone is mainly composed of a pyridine type, or a pyridine type and a pyrrole type. More specifically, when the treatment temperature of the nitriding treatment is more than 25 °C and 1,500 °C or lower, the nitrogen atom is mainly composed of a pyridine type and a pyrrole type. The nitrogen atom is introduced into the carbon backbone with occurrence of a structural defect therein being inhibited. For example, when a nitrogen atom is introduced into the carbon backbone of the carbon material by the chemical vapor deposition (CVD) method, the nitrogen atom is composed of a graphite type and a pyridine type.

There is no particular limitation on the treatment time (reaction time) of the nitriding treatment, and it is preferably in the range of 1 second to 24 hours, more preferably 2 minutes to 6 hours, and still more preferably 30 minutes to 4 hours. When the treatment time is 1 second or more, insufficient introduction of a nitrogen atom into the carbon material can be prevented. On the other hand, when the treatment time is 24 hours or less, decrease in production efficiency due to prolonged production time can be prevented.

Here, the nitriding treatment may be continuously performed by introducing a nitriding treatment gas containing at least a nitrogen-containing gas into a reaction container, without removing the carbon material after the fluorination treatment from the reaction container. In this way, complicated works can be omitted, and the treatment time can be attempted to be shortened. Furthermore, a nitrogen atom can be introduced into the carbon material with the carbon material after the fluorination treatment being not affected by moisture and oxygen in the air.

There is no particular limitation on a pressure condition when the nitriding treatment is performed, and the nitriding treatment may be performed under increased pressure or under reduced pressure. From the viewpoint of economy and safety, the nitriding treatment is preferably performed under normal pressure. There is no particular limitation on a reaction container for the nitriding treatment, and a conventionally known reaction container, such as a fixed bed and a fluidized bed, can be adopted.

There is no particular limitation on a method for bringing the carbon material into contact with the nitriding treatment gas, and for example, the carbon material can be brought into contact under a flow of the nitriding treatment gas.

Here, a fluorine atom may exist via a carbon-fluorine bond on the surface of the carbon material after the nitriding treatment. For this reason, as in the case of the first embodiment, in order to maintain the dispersibility of the carbon material into a dispersion medium, the step for removing a fluorine atom is preferably not included. However, when the dispersibility of the carbon material into a dispersion medium is not maintained, the step for removing a fluorine atom may be performed by a conventionally known method. There is no particular limitation on the dispersion medium, and the same dispersion medium as mentioned in the first embodiment can be used.

In the method for producing a carbon material of this second embodiment, after the boronization treatment and/or the phosphorization treatment is/are completed, further at least two optional treatments of the fluorination treatment, the nitriding treatment, and the boronization treatment and/or the phosphorization treatment may be sequentially and repeatedly performed. In this way, for example, when the fluorination treatment and the nitriding treatment are repeatedly performed, it becomes possible to introduce still more nitrogen atoms into the carbon material after the boronization treatment and/or the phosphorization treatment.

For example, when the fluorination treatment and the boronization treatment and/or the phosphorization treatment are repeatedly performed, it becomes possible to introduce still more boron atoms and/or phosphorus atoms into the carbon material. There is no particular limitation on the number of repeats and the order of at least two treatments of the fluorination treatment, the nitriding treatment, and the boronization treatment and/or the phosphorization treatment.

From the above, the production method of this embodiment can obtain a carbon material in which a nitrogen atom and a boron atom and/or a phosphorus atom are introduced into part of carbon atoms in the carbon backbone, or part of the carbon atoms in the carbon backbone are substituted with a nitrogen atom, and a boron atom and/or a phosphorus atom is/are introduced into the carbon backbone or the surface, and in which an amino group is introduced into the surface of the carbon material. In the carbon material obtained by the production method, a nitrogen atom and a boron atom and/or a phosphorus atom are introduced into the carbon backbone or the surface without causing a structural defect in the carbon backbone.

When the carbon material of this second embodiment is, for example, a single-walled carbon nanotube into which a nitrogen atom and a boron atom and/or a phosphorus atom are introduced, or the like, it becomes possible to appropriately control the charge state of tis surface and the carrier transport properties, and application to a polarizable electrode of an electric double-layer capacitor, an active layer of an organic thin-film photovoltaic cell, an air electrode of a fuel cell, and the like becomes possible. Regarding to application to an air electrode of a fuel cell, specifically, the carbon material may be used as a catalyst of an air electrode.

### EXAMPLES

### Example 1

A single-walled carbon nanotube (10 mg) was introduced into a polytetrafluoroethylene (PTFE) container (a capacity of 5 mL), and this container was placed in an electropolished SUS316L chamber (a capacity of 30 mL). Further, the gas in the chamber was replaced under vacuum by nitrogen, the temperature was raised to 250 °C at a rate of 4 °C/min under a flow of nitrogen (20 mL/min), and isothermal treatment was performed for 2 hours.

Next, the gas in the chamber was replaced under vacuum by a fluorination treatment gas that was obtained by diluting a fluorine gas with nitrogen to 20 vol%, and the gas was flowed in the chamber at a flow rate of 25 mL/min. Further, the temperature in the chamber was raised to 250 °C at a rate of 4 °C/min, and fluorination treatment was performed for 4 hours. Then, the gas in the chamber was replaced under vacuum by nitrogen, the temperature was allowed to cool to room temperature under a flow of nitrogen (20 mL/min), and a single-walled carbon nanotube after the fluorination treatment was taken out.

Next, the single-walled carbon nanotube after the fluorination treatment was put into an electric tubular furnace, the treatment temperature was set at 600 °C. Then, a boronization treatment gas that was obtained by diluting a BF₃ gas with nitrogen to 1.0 vol% was flowed, and boronization treatment was performed. The treatment time was 1 hour. Then, the gas in the furnace was replaced under vacuum by nitrogen, and the temperature was allowed to cool to room temperature under a flow of nitrogen (250 mL/min), thereby producing a single-walled carbon nanotube into which a boron atom is introduced.

### Example 2

In this Example, first, fluorination treatment of a single-walled carbon nanotube was performed in the same manner as in Example 1. Next, the single-walled carbon nanotube after the fluorination treatment was put into an electric tubular furnace, and the treatment temperature was set at 100 °C. Then, a nitriding treatment gas that was obtained by diluting an NH₃ gas with nitrogen to 1.0 vol% was flowed, and nitriding treatment was performed. The treatment time was 1 hour.

Then, the gas in the furnace was replaced under vacuum by nitrogen, and the temperature was allowed to cool to room temperature under a flow of nitrogen (250 mL/min), thereby producing a nitrogen-containing single-walled carbon nanotube (nitrogen-containing carbon material) in which an amino group is introduced into the surface and part of carbon atoms in the carbon backbone are substituted with a nitrogen atom.

Further, the nitrogen-containing single-walled carbon nanotube in which an amino group is introduced into the surface after the nitriding treatment was put into an electric tubular furnace, and the treatment temperature was set at 600 °C. Then, a boronization treatment gas that was obtained by diluting a BF₃ gas with nitrogen to 1.0 vol% was flowed, and boronization treatment was performed. The treatment time was 1 hour. Then, the gas in the furnace was replaced under vacuum by nitrogen, and the temperature was allowed to cool to room temperature under a flow of nitrogen (250 mL/min), thereby producing a single-walled carbon nanotube into which a boron atom is introduced.

### Example 3

In this Example, in place of the single-walled carbon nanotube of the Example 1, a nitrogen-containing single-walled carbon nanotube in which part of carbon atoms in the carbon backbone are substituted with a nitrogen atom was used as the starting material. Other than that, in the same manner as in the Example 1, a single-walled carbon nanotube into which a boron atom is introduced was produced.

### Example 4

In this Example, in place of the single-walled carbon nanotube of the Example 2, a nitrogen-containing single-walled carbon nanotube in which part of carbon atoms in the carbon backbone are substituted with a nitrogen atom was used as the starting material. Other than that, in the same manner as in the Example 2, a single-walled carbon nanotube into which a boron atom is introduced was produced.

### Example 5

In this Example, in place of the single-walled carbon nanotube of the Example 1, a carbon black was used as the starting material. Other than that, in the same manner as in the Example 1, a carbon black into which a boron atom is introduced was produced.

### Example 6

In this Example, first, fluorination treatment and nitriding treatment of a single-walled carbon nanotube were sequentially performed in the same manner as in Example 2. Next, the nitrogen-containing single-walled carbon nanotube after the nitriding treatment was put into an electric tubular furnace. Then, a phosphorization treatment gas that was obtained by diluting a PF₅ gas with nitrogen to 1.0 vol% was flowed, and phosphorization treatment was performed. In the phosphorization treatment, the treatment temperature was 600 °C and the treatment time was 1 hour. Then, the gas in the furnace was replaced under vacuum by nitrogen, and the temperature was allowed to cool to room temperature under a flow of nitrogen (250 mL/min), thereby producing a single-walled carbon nanotube into which a phosphorus atom is introduced.

### Comparative Example 1

In this Comparative Example, the single-walled carbon nanotube as the starting material in Example 1, namely, a single-walled carbon nanotube that was not been subjected to any of fluorination treatment, nitriding treatment, boronization treatment, and phosphorization treatment was used.

### Comparative Example 2

In this Comparative Example, a single-walled carbon nanotube for this Comparative Example was produced in the same manner as in Example 1 except that fluorination treatment was not performed and boronization treatment was performed.

### Comparative Example 3

In this Comparative Example, a single-walled carbon nanotube for this Comparative Example was produced in the same manner as in Example 6 except that fluorination treatment and nitriding treatment were not performed and phosphorization treatment was performed.

### Elemental Analysis

Elemental analysis by X-ray photoelectron spectroscopy (Shimadzu Corporation, KRATOS AXIS-HSi) was performed for each of the single-walled carbon nanotubes obtained in Examples 1 to 4 and 6, the carbon black obtained in Example 5, and the untreated single-walled carbon nanotube in Comparative Example 1. Atomic percentage compositions of a boron atom, a phosphorus atom, and a nitrogen atom in the single-walled carbon nanotube and the carbon black in each Example were also calculated. The same elemental analysis was performed for the single-walled carbon nanotubes in Comparative Examples 1 to 3. The results are shown in Table 1 and Table 2 below.

**[Table 1]**

| | Carbon material | Treatment 1 | | | | Treatment 2 | | | | Treatment 3 | | | |
|---|---|---|---|---|---|---|---|---|---|---|---|---|---|
| | | Treatment gas | Concentration (vol%) | Treatment temperature (°C) | Treatment time | Treatment gas | Concentration (vol%) | Treatment temperature (°C) | Treatment time | Treatment gas | Concentration (vol%) | Treatment temperature (°C) | Treatment time |
| Example 1 | SWCNT | F₂ | 20 | 250 | 4 hours | BF₃ | 1.0 | 600 | 1 hour | - | - | - | - |
| Example 2 | | F₂ | 20 | 250 | 4 hours | NH₃ | 1.0 | 100 | 1 hour | BF₃ | 1.0 | 600 | 1 hour |
| Example 3 | Nitrogen-containing SWCNT | F₂ | 20 | 250 | 4 hours | BF₃ | 1.0 | 600 | 1 hour | - | - | - | - |
| Example 4 | | F₂ | 20 | 250 | 4 hours | NH₃ | 1.0 | 100 | 1 hour | BF₃ | 1.0 | 600 | 1 hour |
| Example 5 | CB | F₂ | 20 | 150 | 4 hours | BF₃ | 1.0 | 600 | 1 hour | - | - | - | - |
| Example 6 | SWCNT | F₂ | 20 | 250 | 4 hours | NH₃ | 1.0 | 100 | 1 hour | PF₅ | 1.0 | 600 | 1 hour |
| Comparative Example 1 | SWCNT | - | - | - | - | - | - | - | - | - | - | - | - |
| Comparative Example 2 | SWCNT | - | - | - | - | BF₃ | 1.0 | 600 | 1 hour | - | - | - | - |
| Comparative Example 3 | SWCNT | - | - | - | - | PF₅ | 1.0 | 600 | 1 hour | - | - | - | - |

| | | | | | | | | | | | | | |
|---|---|---|---|---|---|---|---|---|---|---|---|---|---|
| (SWCNT, single-walled carbon nanotube; CB, carbon | | | | | | | | | | | | | |

**[Table 2]**

| | Atomic percentage composition (at.%) of each element | | | |
|---|---|---|---|---|
| | Boron | Phosphorus | Nitrogen | Fluorine |
| Example 1 | 0.80 | - | - | 13.75 |
| Example 2 | 1.03 | - | - | 4.95 |
| Example 3 | 0.95 | - | 3.31 | 2.66 |
| Example 4 | 2.50 | - | 6.10 | 5.92 |
| Example 5 | 1.00 | - | - | 3.29 |
| Example 6 | - | 0.37 | - | 3.27 |
| Comparative Example 1 | - | - | - | - |
| Comparative Example 2 | - | - | - | - |
| Comparative Example 3 | - | - | - | - |

### Catalytic Activity in Oxygen Reduction Reaction

For the single-walled carbon nanotubes according to Examples 1, 4, and 6 and the untreated single-walled carbon nanotube in Comparative Example 1, a catalytic activity in oxygen reduction reaction (ORR) of each nanotube was evaluated. Specifically, in accordance with the Fuel Cell Commercialization Conference of Japan (FCCJ) protocol, a sample (20 mg) of each single-walled carbon nanotube produced in Example 1, 4, or 6, 100 µl of a 5% Nafion aqueous solution, and 25 mL of a mixed solvent (water: isopropyl alcohol (IPA) = 6 mL:19 mL) were mixed, and a suspension that was subjected to ultrasonic dispersion for 30 minutes or more was prepared.

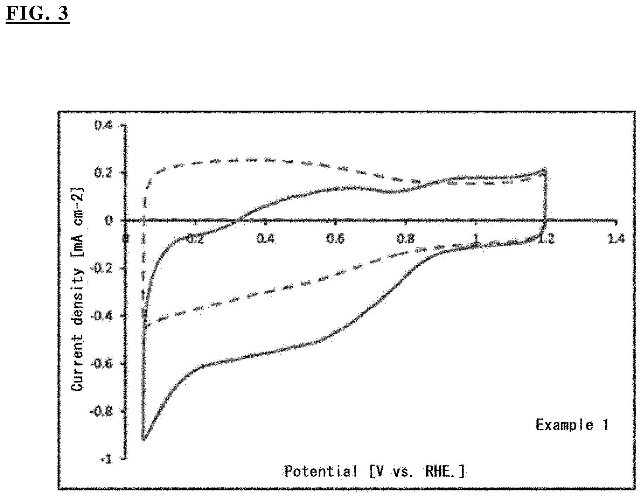

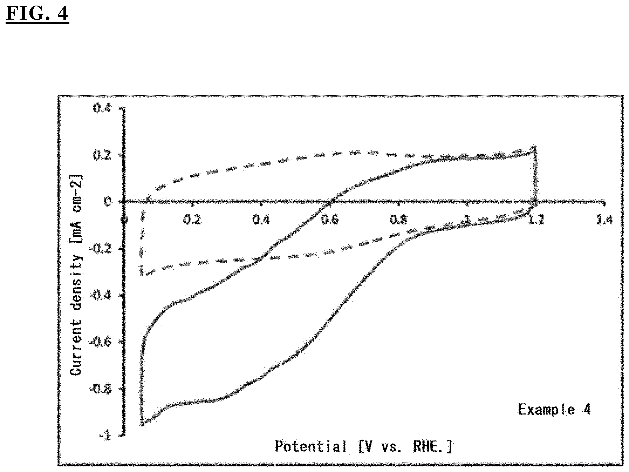

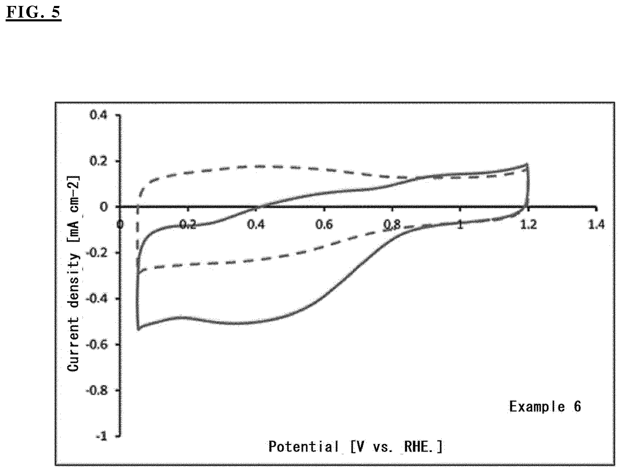

For a three-electrode evaluation cell using a working electrode that was obtained by dropping 8 µl of this suspension on a glassy carbon electrode (diameter: 4 mm) and sufficiently drying at room temperature, cyclic voltammetry (CV) measurement was performed. The CV measurement was first performed in a state in which the evaluation cell was controlled at a temperature of 25 °C and a nitrogen gas was bubbled. Next, the CV measurement was also performed in a state in which, at the same temperature, an oxygen gas was bubbled. The same evaluation was performed for the untreated single-walled carbon nanotube in Comparative Example 1. The results are shown in FIG. 3 to FIG. 6.

The measurement conditions of the CV measurement were as follows:
- Electrolyte: a 0.1 M HClO₄ aqueous solution
- Sweep rate: 50 mV/sec
- Potential sweep range (potential window): 0.05 to 1.2 V (vs. RHE)
- Reference electrode: RHE
- Counter electrode: Platinum wire

### Results

As can be seen from Table 1, it was confirmed that a boron atom is introduced into each of the single-walled carbon nanotubes in Examples 1 to 4 and the carbon black in Example 5. However, in Example 2, no nitrogen atom was confirmed despite the fact that the single-walled carbon nanotube was subjected to nitriding treatment. This is considered to be because, after nitriding treatment, an amino group bound to the surface of the carbon material was removed in the process of boronization treatment.

In the single-walled carbon nanotube in Example 6, it was confirmed that only phosphorus atom is introduced, and the existence of a nitrogen atom was not confirmed. This is also considered to be because an amino group bound to the surface of the carbon material was removed in the process of phosphorization treatment, as in the case of Example 2.

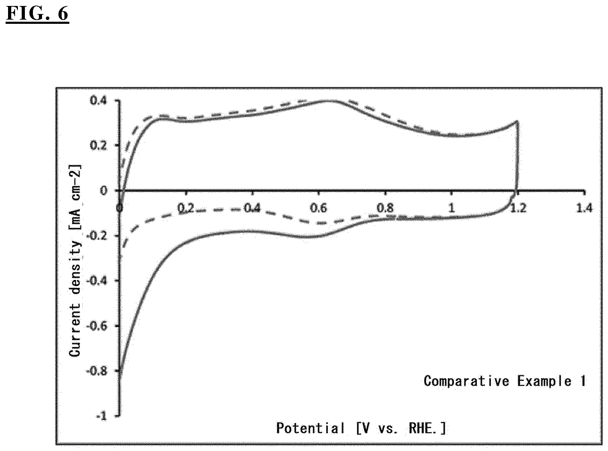

Regarding ORR catalytic activity, as can be seen from FIG. 3 to FIG. 5, it was confirmed that a current associated with oxygen reduction flowed when an oxygen gas was bubbled, compared with when a nitrogen gas was bubbled. As can be seen from FIG. 6, it was confirmed that, in the untreated single-walled carbon nanotube that was not subjected to fluorination treatment or the like, there was no difference between the case when a nitrogen gas was bubbled and the case when an oxygen gas was bubbled, and that a current associated with oxygen reduction did not flow. From these results, it is estimated that introduction of a boron atom or a phosphorus atom changed the electronic state of the single-walled carbon nanotube and improved the ORR catalytic activity.

When the single-walled carbon nanotube or the carbon black according to this Example is used for, for example, a catalyst material for an air electrode of a fuel cell, it becomes possible to significantly accelerate the oxygen reduction reaction in the air electrode, and it is possible to attempt to improve battery performance.

## Claims

1. A carbon material in which a boron atom and/or a phosphorus atom is/are introduced into part of carbon atoms composing the carbon material.

2. The carbon material according to claim 1,
wherein a carbon-fluorine bond exists on a surface of the carbon material.

3. The carbon material according to claim 1 or 2,
wherein the carbon material before the boron atom and/or the phosphorus atom is/are introduced is a nitrogen-containing carbon material which has a carbon backbone composed of a carbon atom and in which part of the carbon atoms in the carbon backbone are substituted with a nitrogen atom.

4. The carbon material according to claim 3,
wherein the nitrogen atom is at least one selected from the group consisting of a pyridine type, a pyrrole type, a graphite type, an oxidized type, and a combination thereof.

5. The carbon material according to claim 1 or 2,
wherein the carbon material before the boron atom and/or the phosphorus atom is/are introduced is a nitrogen-containing carbon material in which an amino group is bound on a surface thereof.

6. The carbon material according to claim 5,
wherein the amino group is at least one selected from the group consisting of an unsubstituted amino group, a monosubstituted amino group, and a disubstituted amino group.

7. The carbon material according to claim 1 or 2,
wherein the carbon material before the boron atom and/or the phosphorus atom is/are introduced is at least one selected from the group consisting of a carbon nanocoil, graphite, carbon black, diamond-like carbon, a carbon fiber, graphene, amorphous carbon, a fullerene, a carbon nanotube, and a diamond.

8. The carbon material according to claim 3 or 4,
wherein the nitrogen-containing carbon material is at least one carbon material selected from the group consisting of a carbon nanocoil, graphite, carbon black, diamond-like carbon, a carbon fiber, graphene, amorphous carbon, a fullerene, a carbon nanotube, and a diamond and in which part of carbon atoms in a carbon backbone of the carbon material are substituted with the nitrogen atom.

9. The carbon material according to claim 5 or 6,
wherein the nitrogen-containing carbon material is at least one carbon material selected from the group consisting of a carbon nanocoil, graphite, carbon black, diamond-like carbon, a carbon fiber, graphene, amorphous carbon, a fullerene, a carbon nanotube, and a diamond and in which an amino group is bound on a surface thereof.

10. A method for producing a carbon material in which a boron atom and/or a phosphorus atom is/are introduced into part of carbon atoms composing the carbon material, the method comprising the steps of:
- bringing the carbon material into contact with a fluorination treatment gas containing a fluorine-containing gas, thereby subjecting a surface of the carbon material to fluorination treatment; and
- bringing the carbon material after the fluorination treatment into contact with a boronization treatment gas containing a boron-containing gas, thereby subjecting to boronization treatment and/or into contact with a phosphorization treatment gas containing a phosphorus-containing gas, thereby subjecting to phosphorization treatment.

11. The method for producing a carbon material according to claim 10,
wherein the fluorination treatment step and the boronization treatment and/or phosphorization treatment step are repeatedly performed.

12. A method for producing a carbon material in which a boron atom and/or a phosphorus atom is/are introduced into part of carbon atoms composing the carbon material, the method comprising the steps of:
- bringing the carbon material into contact with a fluorination treatment gas containing a fluorine-containing gas, thereby subjecting a surface of the carbon material to fluorination treatment;
- bringing the carbon material after the fluorination treatment into contact with a nitriding treatment gas containing a nitrogen-containing gas while heating, thereby subjecting to nitriding treatment; and
- bringing the carbon material after the nitriding treatment into contact with a boronization treatment gas containing a boron-containing gas, thereby subjecting to boronization treatment and/or into contact with a phosphorization treatment gas containing a phosphorus-containing gas, thereby subjecting to phosphorization treatment.

13. The method for producing a carbon material according to claim 12,
wherein at least any two steps of the fluorination treatment step, the nitriding treatment step, and the boronization treatment and/or phosphorization treatment step is/are sequentially and repeatedly performed.

14. The method for producing a carbon material
according to any one of claims 10 to 13,
wherein, as the carbon material before the fluorination treatment is performed, a nitrogen-containing carbon material which has a carbon backbone composed of a carbon atom and in which part of the carbon atoms in the carbon backbone are substituted with a nitrogen atom is used.

15. The method for producing a carbon material according to claim 14,
wherein the nitrogen atom is at least one selected from the group consisting of a pyridine type, a pyrrole type, a graphite type, an oxidized type, and a combination thereof.

16. The method for producing a carbon material
according to any one of claims 10 to 13,
wherein, as the carbon material before the fluorination treatment is performed, a nitrogen-containing carbon material in which an amino group is bound on a surface thereof is used.

17. The method for producing a carbon material according to claim 16,
wherein the amino group is at least one selected from the group consisting of an unsubstituted amino group, a monosubstituted amino group, and a disubstituted amino group.

18. The method for producing a carbon material
according to any one of claims 10 to 13,
wherein, as the carbon material before the fluorination treatment is performed, at least one selected from the group consisting of a carbon nanocoil, graphite, carbon black, diamond-like carbon, a carbon fiber, graphene, amorphous carbon, a fullerene, a carbon nanotube, and a diamond is used.

19. The method for producing a carbon material according to claim 14 or 15, wherein, as the nitrogen-containing carbon material,
at least one carbon material selected from the group consisting of a carbon nanocoil, graphite, carbon black, diamond-like carbon, a carbon fiber, graphene, amorphous carbon, a fullerene, a carbon nanotube, and a diamond and in which part of carbon atoms in a carbon backbone in the carbon material are substituted with the nitrogen atom is used.

20. The method for producing a carbon material according to claim 16 or 17, wherein, as the nitrogen-containing carbon material, at least one carbon material selected from the group consisting of a carbon nanocoil, graphite, carbon black, diamond-like carbon, a carbon fiber, graphene, amorphous carbon, a fullerene, a carbon nanotube, and a diamond and in which an amino group is bound on a surface thereof is used.

21. The method for producing a carbon material
according to any one of claims 10 to 20,
wherein the fluorination treatment is performed using a gas containing a fluorine-containing gas in a proportion of 0.01 vol% to 100 vol%, based on the total volume as the fluorination treatment gas under a condition of a treatment time of 1 second to 24 hours and a treatment temperature of 0 °C to 600 °C.

22. The method for producing a carbon material
according to any one of claims 10 to 21,
wherein the boronization treatment is performed using a gas containing a boron-containing gas in a proportion of 0.01 vol% to 100 vol% based on the total volume as the boronization treatment gas under a condition of a treatment time of 1 second to 24 hours and a treatment temperature of 1,500 °C or lower.

23. The method for producing a carbon material
according to any one of claims 10 to 22,
wherein the phosphorization treatment is performed using a gas containing a boron-containing gas in a proportion of 0.01 vol% to 100 vol% based on the total volume as the phosphorization treatment gas under a condition of a treatment time of 1 second to 24 hours and a treatment temperature of 1,500 °C or lower.

24. The method for producing a carbon material according to claim 12 or 13,
wherein the nitriding treatment is performed using a gas containing a nitrogen-containing gas in a proportion of 0.01 to 100 vol% based on the total volume as the nitriding treatment gas under a condition of a treatment time of 1 second to 24 hours.

25. The method for producing a carbon material according to claim 10 or 11,
wherein a step for removing a fluorine atom existing via a carbon-fluorine bond on a surface of the carbon material after the boronization treatment and/or the phosphorization treatment is not included.

26. The method for producing a carbon material according to claim 12, 13, or 24, wherein a step for removing a fluorine atom existing via a carbon-fluorine bond on a surface of the carbon material after the boronization treatment, the phosphorization treatment and/or the nitriding treatment is not included.

27. An air electrode catalyst for a fuel cell, comprising:
the carbon material according to any one of claims 1 to 9.
